# EUROPÄISCHE PATENTSCHRIFT

(11) **EP 3 169 888 B1**
(45) Veröffentlichungstag und Bekanntmachung des Hinweises auf die Patenterteilung: **30.01.2019**
(21) Anmeldenummer: 15736196.5
(22) Anmeldetag: 08.07.2015
(51) Int. Cl.: F02D 19/06, F02M 47/02, F02M 43/04

(54) **DUAL-FUEL-KRAFTSTOFFINJEKTOR**
DUAL-FUEL FUEL INJECTOR
DOUBLE INJECTEUR DE CARBURANT

(30) Priorität: 19.07.2014 DE 102014010717
(43) Veröffentlichungstag der Anmeldung: 24.05.2017
(73) Patentinhaber: Woodward L'Orange GmbH, 70435 Stuttgart (DE)
(72) Erfinder: KALENBORN, Markus, 89160 Dornstadt (DE)
(74) Vertreter: Conroy, John
(86) Internationale Anmeldenummer: PCT/EP2015/001388
(87) Internationale Veröffentlichungsnummer: WO 2016/012079

(56) Entgegenhaltungen:
- DE-B3-102013 000 048
- DE-C1- 3 501 236
- US-A1- 2014 196 687

## Beschreibung

Die vorliegende Erfindung betrifft einen Dual-Fuel-Kraftstoffinjektor gemäß dem Oberbegriff von Anspruch 1. Der Dual-Fuel-Kraftstoffinjektor ist z.B. mit Zündstrahl-Motoren verwendbar, insbesondere solchen, welche neben einem Zündstrahlbetrieb mit Brenngas (und einem Diesel- oder Schweröl-Zündstrahl) einen reinen Diesel- oder Schwerölbetrieb vorsehen. An die Stelle von Schweröl kann hierbei z.B. auch Bio-Öl oder Biokraftstoff treten.

Gasförmige Kraftstoffe gewinnen im (Groß-)Motorensektor, insbesondere bei Stationärmotoren zur Stromerzeugung, zunehmend an Bedeutung. Erdgas z.B. eignet sich wegen seiner sehr guten Verfügbarkeit und seines günstigeren Emissionspotenzials gegenüber Dieselkraftstoff ausgezeichnet für einen wirtschaftlichen und umweltschonenden Motorbetrieb.

Die Druckschrift US 2014/196687 A1 offenbart einen Dual-Fuel-Kraftstoffinjektor, mit welchem Brenngas ausbringbar ist.

Um mit Gasbetrieb bei der Gaseinblasung eine gute 360°-Abdeckung im Brennraum zu erzielen, können die Gasdüsenöffnungen an einem Dual-Fuel-Kraftstoffinjektor bevorzugt über dessen Umfang verteilt angeordnet werden, insbesondere in einer Anordnung, welche eine Ausbringung des Brenngases mit einer ausgeprägten radialen Richtungskomponente vorsieht.

Ausgehend hiervon liegt der vorliegenden Erfindung die Aufgabe zu Grunde, einen Dual-Fuel-Kraftstoffinjektor anzugeben, welcher baulich einfach eine Brenngasaubringung mit radialer Richtungskomponente bei insbesondere vorteilhafter Strömungsführung begünstigt.

Diese Aufgabe wird mit einem Dual-Fuel-Kraftstoffinjektor mit den Merkmalen des Anspruchs 1 gelöst.

Vorteilhafte Weiterbildungen und Ausführungsformen der Erfindung sind in den weiteren Ansprüchen angegeben.

Vorgeschlagen wird erfindungsgemäß ein Dual-Fuel-Kraftstoffinjektor, insbesondere zur Verwendung mit einem ersten Kraftstoff in Form von Flüssigkraftstoff, zum Beispiel Dieselkraftstoff, Biokraftstoff oder Schweröl und weiterhin mit einem zweiten Kraftstoff in Form von gasförmigem Kraftstoff, zum Beispiel Erdgas. Der Dual-Fuel-Kraftstoffinjektor kann für einen Zündstrahlbetrieb vorgesehen sein (Flüssigkraftstoff-Zündstrahl zur Zündung des gasförmigen Kraftstoffs), daneben insbesondere auch für einen reinen Flüssigkraftstoffbetrieb. Der Dual-Fuel-Kraftstoffinjektor ist z.B. mit einem Großmotor verwendbar, zum Beispiel in einem Kraftfahrzeug wie etwa einem Schiff oder einem Nutzfahrzeug, oder zum Beispiel für eine stationäre Einrichtung vorgesehen, z.B. für ein Blockheizkraftwerk, ein (Not-)Stromaggregat, z.B. auch für Industrieanwendungen.

Der erfindungsgemäße Dual-Fuel-Kraftstoffinjektor weist eine Mehrzahl von hubsteuerbaren Gas-Düsennadeln auf, welche am Dual-Fuel-Kraftstoffinjektor in jeweiligen Aufnahmen axial verschieblich aufgenommen und in einer Umfangsrichtung des Dual-Fuel-Kraftstoffinjektors verteilt sind. Die Gas-Düsennadeln sind bevorzugt indirekt steuerbar, insbesondere nach dem an sich bekannten Prinzip der Hubsteuerung über einen Steuerraum und ein Pilotventil.

Der Dual-Fuel-Kraftstoffinjektor weist weiterhin einen, insbesondere einen einzigen, (Gas-) Düsenraum auf, welcher für die Mehrzahl der Gas-Düsennadeln bereitgestellt ist. Der Düsenraum ist insoweit ein der Mehrzahl von Gas-Düsennadeln gemeinsamer Düsenraum, insbesondere ein sämtlichen Gas-Düsennadeln gemeinsamer Düsenraum. Der Düsenraum ist bevorzugt ein Ringraum, weiterhin insbesondere ein Düsenraum, welcher sich ebenfalls in der Umfangsrichtung des Dual-Fuel-Kraftstoffinjektors erstreckt. Der Düsenraum ist weiterhin bevorzugt in einem Düsenmodul des Dual-Fuel-Kraftstoffinjektors bereitgestellt, insbesondere nahe einer Düsenanordnung des Dual-Fuel-Kraftstoffinjektors.

Mittels der in Umfangsrichtung verteilten Gas-Düsennadeln und dem diesen gemeinsamen Düsenraum kann in den Düsenraum eingebrachtes (insbesondere hochdruckbeaufschlagtes) Brenngas, insbesondere eingebracht via einen Gas-Hochdruckkanal bzw. eine Gas-Versorgungsleitung des Dual-Fuel-Kraftstoffinjektors, aus dem Injektor z.B. im Rahmen einer Brenngaseinblasung abgegeben werden, insbesondere mit einer beabsichtigten, guten 360°-Abdeckung, d.h. wenn die Gas-Düsennadeln offengesteuert werden, mithin Strömungswege zu - dem Düsenraum nachgeordneten - (Gas-) Düsenöffnungen des Injektors bzw. dessen (Gas-)Düsenanordnung aufgesteuert werden.

Der Düsenraum im Sinne der Erfindung ist insoweit ein für die Mehrzahl von Düsennadeln gemeinsam bereitgestellter Raum am Dual-Fuel-Kraftstoffinjektor, in welchen über einen Gas-Hochdruckkal Brenngas eingebracht wird, und aus welchem Benngas über eine Gas-Düsenanordnung des Dual-Fuel-Kraftstoffinjektors abgegeben wird.

Gekennzeichnet ist der Dual-Fuel-Kraftstoffinjektor erfindungsgemäß dadurch, dass der Düsenraum radial außenliegende Ausbuchtungen aufweist, innerhalb deren jeweiligen Querschnitts je ein Einlaufquerschnitt eines über die jeweilige Gas-Düsennadel selektiv versperrbaren Strömungswegs zu wenigstens einer Düsenöffnung definiert ist. Bevorzugt ist der Einlaufquerschnitt hierbei auch innerhalb eines Ventilsitzes einer jeweiligen Gas-Düsennadel bzw. eines damit und dem Ventilsitz gebildeten Düsenventils definiert.

Mittels dieser erfindungsgemäßen Ausgestaltung, bei welcher einem seitens des Düsenraums in den Einlaufquerschnitt strömenden Kraftstoff (Brenngas) mittels der Ausbuchtungen eine vom Düsenraum radial nach außen weisende Richtungskomponente und insbesondere auch eine erhöhte, gleichermaßen radial nach außen weisende Geschwindigkeitskomponente aufgeprägt wird, gelingt es vorteilhaft, den Strömungseinlauf in den Strömungsweg (via den Einlaufquerschnitt) hin zu den Düsenöffnungen für eine beabsichtigte Ausbringung des Brenngases mit deutlich hervortretender radialer Richtungskomponente zu optimieren, mithin eine günstige Strömungsführung hin zu den (stromabwärts der jeweiligen Einlaufquerschnitte angeordneten) Düsenöffnungen zu erzielen. Insoweit ist eine jeweilige Ausbuchtung im Rahmen der Erfindung insbesondere geeignet, Brenngas-Teilströme, welche sich in Umfangsrichtung betrachtet von zwei entgegen gesetzten Seiten des Düsenraums hin zu dem Einlaufquerschnitt in der Ausbuchtung bewegen, unter Ausbildung der beabsichtigten radial nach außen gerichteten Richtungskomponente und erhöhter Strömungsgeschwindigkeit mittels der Ausbuchtung zusammenzuführen.

Bevorzugt erstrecken sich bei dem vorgeschlagenen Dual-Fuel-Kraftstoffinjektor insoweit auch die Strömungswege (z.B. gebildet mittels Bohrungsabschnitten) - von dem jeweiligen Einlaufquerschnitt hin zu der jeweiligen wenigstens einen Düsenöffnung - in einer Richtung, deren radiale Komponente mit einer radialen Richtungskomponente eines über die Ausbuchtung erzielten Strömungseinlaufs in den Einlaufquerschnitt korrespondiert, d.h. bevorzugt derart, dass eine nur geringe oder minimale Umlenkung der entlang des Strömungswegs geführten Strömung erforderlich ist, d.h. die Strömungsverhältnisse wiederum begünstigend und Turbulenzen reduzierend. Bevorzugt ist der jeweilige Strömungsweg hierbei ausgehend vom Düsenraum auch mit kontinuierlich zunehmendem radialen Abstand zu demselben radial nach außen hin zu der Düsenöffnung geführt.

Bevorzugte Ausgestaltungen des Dual-Fuel-Kraftstoffinjektors sehen z.B. weiterhin vor, dass der jeweilige Einlaufquerschnitt radial distal in der Ausbuchtung angeordnet und somit nahezu ausschließlich von an einer radial innenliegenden Seite anströmbar ist, mithin der jeweilige Einlaufquerschnitt über die Ausbuchtung asymmetrisch anströmbar ist. Hierdurch werden der Ausbildung der radial nach außen gerichteten Richtungskomponente entgegen wirkende Strömungen an dem jeweiligen Einlaufquerschnitt wirksam vermieden.

Im Rahmen der vorliegenden Erfindung wird mittels der jeweiligen Ausbuchtung insoweit bevorzugt eine strömungsleitende Einlaufgeometrie gebildet, welche eine Anströmung des Einlaufquerschnitts mit radial nach außen gerichteter Richtungskomponente bewirkt. Insbesondere kann mittels der jeweiligen Ausbuchtung ein Einlauftrichter hin zu dem Einlaufquerschnitt geformt sein, insbesondere mit sich radial nach außen verjüngendem Trichterquerschnitt, welcher eine Anströmung des Einlaufquerschnitts mit der beabsichtigten, radial nach außen gerichteten Richtungskomponente bewirkt.

Den Strömungseinlauf in den Einlaufquerschnitt begünstigend kann insbesondere auch die Düsenraumwand ausgeformt sein, eine strömungsleitende Einlaufgeometrie der Ausbuchtung vorgeschaltet zu bilden. Bevorzugte Ausgestaltungen sehen beispielsweise vor, die Form des Düsenraums samt der Ausbuchtungen in einer radialen Ebene außenumfangsseitig der Form eines Mehrecks und/oder eines Vierecks mit konkaven Seiten anzunähern (wobei die Ausbuchtungen bzw. Einlaufquerschnitte quasi an Ecken des Mehrecks angeordnet sind, z.B. kleeblattförmig, und die Wandung des Düsenraums die konkaven Seiten bildet). Alternativ kann zum Beispiel vorgesehen sein, dass die Form des Düsenraums samt der Ausbuchtungen in einer radialen Ebene außenumfangsseitig eine Ringform (z.B. Kreisform) aufweist, aus welcher durch die Ausbuchtungen gebildete Ausbauchungen radial herausragen. Eine jeweilige solche Geometrie kann im Rahmen der Erfindung insbesondere dadurch gebildet werden, dass die axial verlaufenden Aufnahmen den Düsenraum unter Bildung der - radial außenliegenden - Ausbuchtungen anschneiden, d.h. außenumfangsseitig.

Von der Erfindung sind weiterhin Ausführungsformen umfasst, bei welchen der Düsenraum einen axial düsenferneren Abschnitt aufweist, mittels welchem axial düsennähere Düsenraumabschnitte, an welchen die Ausbuchtungen gebildet sind, kommunizierend verbunden sind. Dies trägt vorteilhaft zu einer gleichmäßigen Gas-Bereitstellung im Düsenraum bei.

Der Dual-Fuel-Kraftstoffinjektor gemäß der vorliegenden Erfindung kann weiterhin dergestalt ausgebildet sein, dass der Düsenraum mittels eines ersten und eines zweiten Düsenkörpers des Dual-Fuel-Kraftstoffinjektors definiert ist. Während der erste Düsenkörper die Gas-Düsennadeln in seiner Umfangsrichtung verteilt aufnimmt, kann der zweite Düsenkörper eine Flüssigkraftstoff-Düsennadel axial verschieblich aufnehmen. Bei Zusammenfügen des ersten und zweiten Düsenkörpers zu einem Düsenkörpermodul des Dual-Fuel-Kraftstoffinjektors kann hierbei auf vorteilhaft einfache Weise der Düsenraum definiert werden, welcher zum Beispiel mittels einer Ringnut im ersten Düsenkörper gebildet ist, und vom zweiten Düsenkörper - nach Montage - gedeckelt wird.

Eine insbesondere äußerst einfache Fertigung wird zum Beispiel dadurch ermöglicht, dass der Düsenraum mittels eines ersten Düsenkörpers gebildet ist, welchen der zweite Düsenkörper unter Definition des Düsenraumes über einen Abschnitt durchdringt.

Mit der Erfindung wird auch eine Brennkraftmaschine vorgeschlagen, insbesondere der eingangs genannten Art, welche wenigstens einen Dual-Fuel-Kraftstoffinjektor nach einem der vorhergehenden Ansprüche aufweist.

Weitere Merkmale und Vorteile der Erfindung ergeben sich aus der nachfolgenden Beschreibung von Ausführungsbeispielen der Erfindung, anhand der Figuren der Zeichnungen, die erfindungswesentliche Einzelheiten zeigen, und aus den Ansprüchen. Die einzelnen Merkmale können je einzeln für sich oder zu mehreren in beliebiger Kombination bei einer Variante der Erfindung verwirklicht sein, wie in den beigefügten Ansprüchen definiert.

Bevorzugte Ausführungsformen der Erfindung werden nachfolgend anhand der beigefügten Zeichnungen näher erläutert. Es zeigen:
- Fig. 1: exemplarisch und schematisch und zum Teil stark vereinfacht einen Dual-Fuel-Kraftstoffinjektor gemäß einer möglichen Ausführungsform der Erfindung in einer Schnittansicht.
- Fig. 2: exemplarisch und schematisch eine Schnittansicht durch einen ersten Düsenkörper des Dual-Fuel-Kraftstoffinjektors nach Fig. 1.
- Fig. 3: exemplarisch und schematisch eine weitere Schnittansicht eines ersten Düsenkörpers gemäß Fig. 1, insbesondere den Düsenraum samt Ausbuchtungen näher veranschaulichend.
- Fig. 4: exemplarisch und schematisch eine abgebrochene Schnittansicht des düsennahen Endes des Düsenkörpers nach Fig. 1 bis Fig 3 mit darin angeordneten Gas-Düsennadeln.
- Fig. 5: exemplarisch und schematisch eine Schnittansicht eines ersten Düsenkörpers eines Dual-Fuel-Kraftstoffinjektors nach einer weiteren möglichen Ausführungsform der Erfindung.
- Fig. 6: exemplarisch und schematisch eine weitere Schnittansicht des Düsenkörpers nach Fig. 5.
- Fig. 7: exemplarisch und schematisch eine Schnittansicht eines ersten Düsenkörpers eines Dual-Fuel-Kraftstoffinjektors gemäß noch einer weiteren möglichen Ausführungs-form der Erfindung.
- Fig. 8: exemplarisch und schematisch eine weitere Schnittansicht des Düsenkörpers gemäß Fig. 7.

In der nachfolgenden Beschreibung und den Zeichnungen entsprechen gleichen Bezugszeichen Elemente gleicher oder vergleichbarer Funktion.

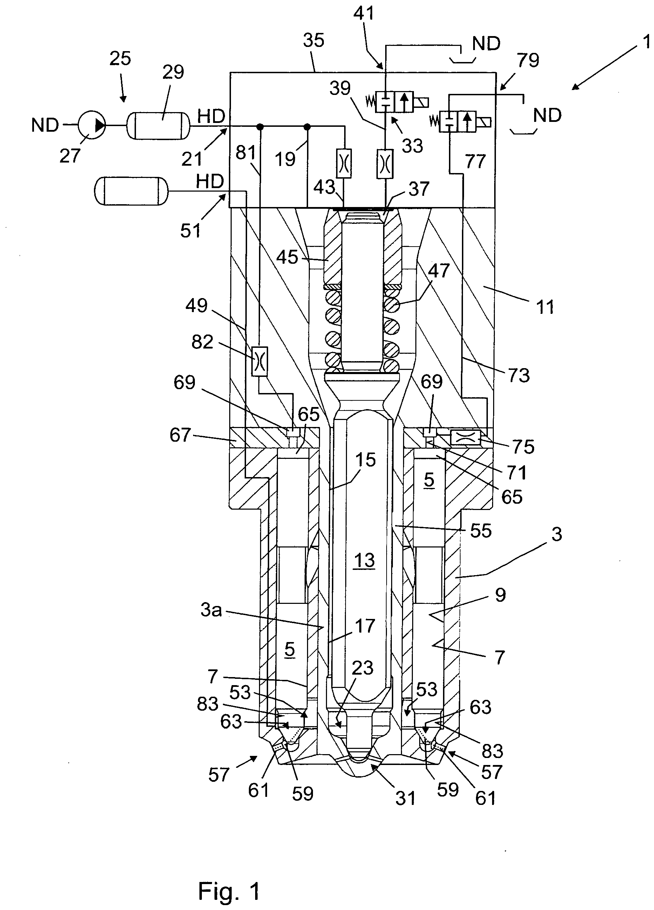

**Fig. 1** zeigt exemplarisch einen erfindungsgemäßen Dual-Fuel-Kraftstoffinjektor (Zweistoffdüse bzw. Zweistoff-Injektor) 1, welcher sowohl für einen Einspritzbetrieb mit einem ersten, flüssigen Kraftstoff (insbesondere Dieselkraftstoff, Bio- oder Schweröl) als auch zur Ausbringung eines zweiten, gasförmigen Kraftstoffes (Brenngas, z.B. Erdgas) bereitgestellt ist, insbesondere zur Brenngaseinblasung. Der Dual-Fuel-Kraftstoffinjektor 1 kann mit einem Dual-Fuel-Kraftstoffeinspritzsystem verwendet werden, z.B. mit einem Gas-Common-Rail-System, weiterhin insbesondere mit einer Brennkraftmaschine, welche bevorzugt für einen Zündstrahlbetrieb (mit eingeblasenem Brenngas und eingespritztem Flüssigkraftstoff-Zündstrahl) als auch für ausschließlichen Flüssigkraftstoffbetrieb via den Dual-Fuel-Kraftstoffinjektor 1 eingerichtet ist.

In dem Dual-Fuel-Kraftstoffinjektor 1, insbesondere in einem (ersten) Düsenkörper 3 desselben, sind mehrere hubsteuerbare (Gas-)Düsennadeln 5 je axial verschieblich angeordnet, d.h. bereitgestellt für das selektive Ausbringen eines gasförmigen Kraftstoffs, insbesondere in Form von Brenngas. Aufgenommen und geführt sind die Gas-Düsennadeln 5 im ersten Düsenkörper 3 jeweils in einer zugehörigen Aufnahme 7 im Dual-Fuel-Kraftstoffinjektor 1, gebildet mittels einer jeweiligen Axialbohrung 9 im ersten Düsenkörper 3.

Die Gas-Düsennadeln 5 sind - insbesondere äquidistant - in Umfangsrichtung des Dual-Fuel-Kraftstoffinjektors 1 bzw. des ersten Düsenkörpers 3 verteilt im Dual-Fuel-Kraftstoffinjektor 1 angeordnet, bevorzugt entlang einer Kreisbahn. Bei dem veranschaulichten Dual-Fuel-Kraftstoffinjektor 1 sind zum Beispiel vier Gas-Düsennadeln 5 im ersten Düsenkörper 3 - in Umfangsrichtung verteilt - angeordnet, womit eine rundumseitig vorteilhaft gleichmäßige Gas-Einbringung in einen Brennraum über 360° erzielbar ist.

Der Dual-Fuel-Kraftstoffinjektor 1 weist weiterhin einen (zweiten) Düsenkörper 11 auf, in welchem eine weitere, hubsteuerbare Düsennadel bzw. Flüssigkraftstoff-Düsennadel 13 bereitgestellt ist, d.h. für Einspritzvorgänge, welche das selektive Ausbringen eines Flüssigkraftstoffs (in einen Brennraum einer Brennkraftmaschine) vorsehen. Die Flüssigkraftstoff-Düsennadel 13 ist ebenfalls axial verschieblich in einer korrespondierenden Aufnahme 15 des Dual-Fuel-Kraftstoffinjektors 1 aufgenommen, welche Aufnahme 15 mittels einer axialen Bohrung 17 im zweiten Düsenkörper 11 gebildet ist.

Am Dual-Fuel-Kraftstoffinjektor 1 ist weiterhin ein Hochdruckkanal 19 vorgesehen, welcher von einem Flüssigkraftstoffeinlass 21 des Dual-Fuel-Kraftstoffinjektors 1 zu einem Flüssigkraftstoff-Düsenraum 23 im zweiten Düsenkörper 11 führt. An den Flüssigkraftstoff-Einlass 21 kann Flüssigkraftstoff seitens einer Hochdruck (HD)-Versorgungsvorrichtung 25 eines Kraftstoffeinspritzsystems, zum Beispiel gebildet mittels einer Hochdruckpumpe 27 und einem Rail 29 und/oder auch einem Einzeldruckspeicher, zugefördert werden, insbesondere ausgehend von einem Flüssigkraftstoffvorrat, z.B. einem Tank.

Für das selektive Ausbringen von Flüssigkraftstoff ist der Dual-Fuel-Kraftstoffinjektor 1 weiterhin eingerichtet, in den Flüssigkraftstoff-Düsenraum 23 eingebrachten hochdruckbeaufschlagten Flüssigkraftstoff in Abhängigkeit der (Hub-)Stellung der Flüssigkraftstoff-Düsennadel 13 über eine Flüssigkraftstoff-Düsenanordnung 31 des Dual-Fuel-Kraftstoffinjektors 1 abzugeben, bei einem Einspritzbetrieb (zum Beispiel reiner Flüssigkraftstoffbetrieb oder Zündstrahlbetrieb) insbesondere in einen Brennraum einer Brennkraftmaschine einzuspritzen.

Im Hinblick auf die Hubsteuerung der Flüssigkraftstoff-Düsennadel 13 ist der Dual-Fuel-Kraftstoffinjektor 1 - wie in Fig. 1 dargestellt - bevorzugt als indirekt betätigter Injektor 1 bereitgestellt, insbesondere mit einem Pilotventil (Steuer- bzw. Servoventil) 33, welches bevorzugt von einer Magnetaktuatorik (oder zum Beispiel von einer Piezoaktuatorik) beherrscht wird. Über das bevorzugt samt seiner Aktuatorik in einem Injektorgehäuse 35 aufgenommene Pilotventil 33 kann ein der Flüssigkraftstoff-Düsennadel 13 zugeordneter Steuerraum 37 des Dual-Fuel-Kraftstoffinjektors 1 ventilstellungsabhängig entlastet werden, insbesondere über einen Leckageströmungsweg 39 des injektorinternen Kraftstoffsystems. Der Leckageströmungsweg 39 führt ausgehend von dem Steuerraum 37 zu einem niederdruckseitigen Leckageauslass 41 des Dual-Fuel-Kraftstoffinjektors 1, das heißt über das Pilotventil (unter Drosselung) 33 zum Beispiel zu einem Leckagesammelbehältnis (Tank).

An den Steuerraum 37 für die Flüssigkraftstoff-Düsennadel 13 führt weiterhin ein Hochdruckpfad 43 des injektorintemen Kraftstoffsystems (mit Drosselung), über welchen der Steuerraum 37 - via hochdruckbeaufschlagten Flüssigkraftstoff - ausgehend von dem Hochdruckkanal 19 belastbar ist. Der Steuerraum 37 ist bevorzugt mittels einer Nadelführungshülse 45 (und dem Injektorgehäuse 35) definiert, welche Nadelführungshülse 45 am düsenfernen Ende der axialen Bohrung 17 des zweiten Düsenkörpers 11 in demselben aufgenommen ist, wobei in der axialen Bohrung 17 weiterhin eine Schließfeder 47 angeordnet sein kann, welche die zweite Düsennadel 13 in Schließstellung drängt, i.e. gegen einen Ventilsitz bzw. Düsennadelsitz benachbart zu der Flüssigkraftstoff-Düsenanordnung 31.

Um für einen Flüssigkraftstoff-Einspritzbetrieb Flüssigkraftstoff über die Flüssigkraftstoff-Düsenanordnung 31 auszubringen, i.e. seitens des Flüssigkrafstoff-Düsenraums 23, kann das (Schließ-)Kräftegleichgewicht an der Flüssigkraftstoff-Düsennadel 13 durch Entlastung des Steuerraums 37 via das Pilotventil 33 aufgelöst werden (Leckageströmungsweg 39 geöffnet), so dass die Flüssigkraftstoff-Düsennadel 13 von dem Ventilsitz abheben und den Strömungsweg zu den Spritzlöchern der Flüssigkraftstoff-Düsenanordnung 31 freigeben kann. Für ein Schließen des Düsenventils wird das Pilotventil 33 in Sperrstellung geschaltet (siehe Fig. 1), woraufhin sich der Druck im Steuerraum 37 über den Hochdruckpfad 43 wieder aufbaut und die Flüssigkraftstoff-Düsennadel 13 schließfederkraftunterstützt in den Nadelsitz zurückkehrt.

Als Steuerfluid zur Belastung und Entlastung des Steuerraums 37 bzw. zur (hydraulischen) Hubsteuerung der Flüssigkraftstoff-Düsennadel 13 ist vorliegend bevorzugt der Flüssigkraftstoff vorgesehen.

Für den Betrieb mit gasförmigem Kraftstoff (Erdgas, Biogas, etc.) weist der Dual-Fuel-Kraftstoffinjektor 1 einen Gas-Hochdruckkanal 49 auf, welcher von einem Brenngas-Einlass 51 am Dual-Fuel-Kraftstoffinjektor 1 zu einem Düsenraum bzw. Gas-Düsenraum 53 für die Mehrzahl von Gas-Düsennadeln 5 führt, d.h. zu einem der Mehrzahl von Gas-Düsennadeln 5 gemeinsamen Düsenraum 53. Baulich vorteilhaft einfach definiert ist der Düsenraum 53 mittels einer in den ersten Düsenkörper 3 (ringförmigen Querschnitts) eingebrachten Ringnut (an einer inneren Umfangsfläche 3a), welche durch einen den ersten Düsenkörper 3 axial durchtauchenden Abschnitt 55 des zweiten Düsenkörpers 11 unter Bildung eines Ringraums bzw. des Düsenraumes 53 geschlossen wird.

Aus dem Düsenraum 53 kann via den Gas-Hochdruckkanal 49 in den Düsenraum 53 eingebrachtes, hochdruckbeaufschlagten Brenngas, zum Beispiel mit einem Druckniveau bis ca. 350 bar, in Abhängigkeit der Hubstellung der Gas-Düsennadeln 5 abgegeben werden, d.h. über eine Gas-Düsenanordnung 57 des Dual-Fuel-Kraftstoffinjektors 1. Hierbei ist via eine jeweilige Gas-Düsennadel 5 ein jeweiliger Strömungsweg 59 (gestrichelt angedeutet) von dem Gasdüsenraum 53 zu wenigstens einer, der Gas-Düsennadel 5 zugeordneten (Gas-)Düsenöffnung 61 der Gas-Düsenanordnung 59 des Dual-Fuel-Kraftstoffinjektors 1 selektiv absperrbar, d.h. im Rahmen einer Auf- oder Zusteuerung eines Einlaufquerschnitts 63 des Strömungswegs 59. Z.B. können einer jeweiligen Gas-Düsennadel 5 bzw. Strömungsweg 59 ein oder zwei GasDüsenöffnungen 61 zugeordnet sein.

Die Hubsteuerung der Gas-Düsennadeln 5 kann mit dem in Fig. 1 veranschaulichten Dual-Fuel-Kraftstoffinjektor 1 analog dem vorstehend für die Hubsteuerung der Flüssigkraftstoff-Düsennadel 13 geschilderten Wirkprinzip erfolgen, i.e. im Rahmen einer indirekten Steuerung der Mehrzahl der Gas-Düsennadeln 5.

Wie in Fig. 1 veranschaulicht, ist jeder der Gas-Düsennadeln 5 zu deren Hubsteuerung am Dual-Fuel-Kraftstoffinjektor 1 ein Steuerraum 65 zur Beaufschlagung mit einem Steuerfluid zugeordnet bzw. für dieselbe bereitgestellt. Als Steuerfluid für die indirekte Steuerung der Gas-Düsennadeln 5 dient - wie für die Flüssigkraftstoff-Düsennadel 13 - der über den Flüssigkraftstoffeinlass 21 an den Dual-Fuel-Kraftstoffinjektor 1 versorgte Flüssigkraftstoff.

Bevorzugt und eine vorteilhaft unaufwändige Steuerung der Gas-Düsennadeln 5 begünstigend, weist der Dual-Fuel-Kraftstoffinjektor 1 weiterhin einen - an einer Zwischenscheibe 67 bereitgestellten - Steuerkanal 69 auf, welcher insbesondere als gemeinsamer Vorsteuerraum für die Mehrzahl von Gas-Düsennadeln 5 bereitgestellt ist und welcher über das Steuerfluid (Flüssigkraftstoff) be- und entlastbar ist. An den Steuerkanal 69 sind die Steuerräume 65 für die ersten Düsennadeln 5 kommunizierend angebunden, d.h. je über eine Zulaufdrosselvorrichtung, zum Beispiel gebildet mittels einer Drosselbohrung 71. Ein Ablaufzweig 73 zur Entlastung des Steuerkanals 69, mithin zur gemeinschaftlichen Entlastung der Steuerräume 65 der Gas-Düsennadeln 5, kann seitens des Steuerkanals 69 über eine Ablaufdrosselvorrichtung 75 geführt sein, das heißt hin zur Niederdruckseite (ND).

Weiterhin zur Hubsteuerung der Gas-Düsennadeln 5 via selektive Entlastung des Steuerkanals 69 bzw. der Steuerräume 65 der ersten Düsennadeln 5 ist - analog zum Flüssigkraftstoffbetrieb - bevorzugt ein weiteres Pilotventil (Steuerventil) 77 am Dual-Fuel-Kraftstoffinjektor 1 bereitgestellt. Das weitere Pilotventil 77 ist (samt seiner Aktuatorik) ebenfalls in dem Injektorgehäuse 35 aufgenommen. In Abhängigkeit der Ventilstellung des weiteren Pilotventils 77 kann der Steuerkanal 69 über den über das weitere Pilotventil 77 geführten Steuerfluid-Ablauf 73 entlastet werden, d.h. zum niederdruckseitigen (ND) Leckageauslass 79, z.B. zu einem Leckagesammelbehältnis (Tank).

Um für einen Brenngas-Einblasbetrieb nunmehr Brenngas über die Gas-Düsenanordnung 57 auszubringen, i.e. seitens des Düsenraums 53, kann das (Schließ-)Kräftegleichgewicht an einer jeweiligen Gas-Düsennadel 5 durch Entlastung des Steuerkanals 69 und insoweit des jeweiligen kommunizierend angebundenen Steuerraums 65 für die Gas-Düsennadel 5 via das weitere Pilotventil 77 aufgelöst werden (Ablauf 73 geöffnet), so dass die jeweilige Gas- Düsennadel 5 von einem Ventilsitz abheben und den Einlaufquerschnitt 63 bzw. darüber den Strömungsweg 59 zu einer zugeordneten Düsenöffnung 61 der Gas-Düsenanordnung 57 freigeben kann.

Für eine Steuerung der Gas-Düsennadeln 5 in deren Schließstellung wird das weitere Pilotventil 77 in Sperrstellung geschaltet (s. Fig. 1), woraufhin sich der Druck im Steuerkanal 69 und insoweit im kommunizierend angebundenen Steuerraum 65 für die Gas-Düsennadel 5 über einen Flüssigkraftstoff-Hochdruckpfad 81 mit einer Zulaufdrossel 82 wieder aufbaut und die jeweilige Gas-Düsennadel 5 in den Nadelsitz zurückkehrt, mithin den Einlaufquerschnitt 63 bzw. den Strömungsweg 59 versperrt.

Die über jeweilige Einlaufquerschnitte 63 anströmbaren Strömungswege 59 sind bei dem Dual-Fuel-Kraftstoffinjektor 1 ausgehend vom Düsenraum 53 hin zu den Düsenöffnungen 61 je radial nach außen orientiert, s. z.B. Fig. 1, so dass sich eine beabsichtigte Brenngas-Einblasung in einen Brennraum mit einer deutlichen radialen Komponente erzielen lässt.

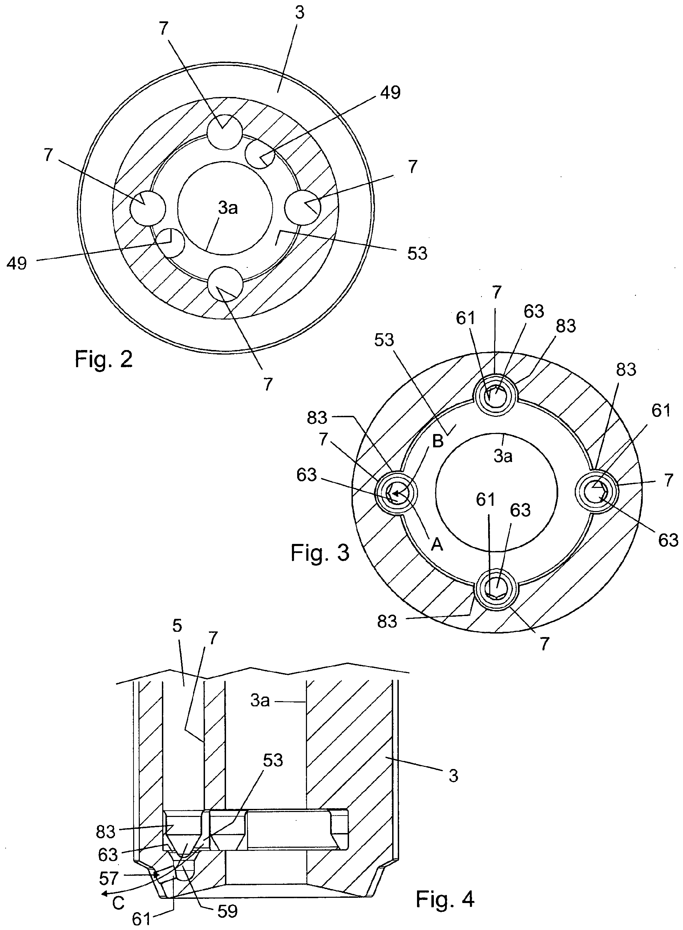

Um insbesondere die Anströmung und Durchströmung eines jeweiligen, derart radial nach außen orientierten Strömungswegs 59 zu begünstigen, der Strömung in den zugehörigen Einlaufquerschnitt 63 insbesondere eine radial nach außen gerichtete und bevorzugt mit der radialen Richtungskomponente des Strömungswegs 59 korrespondierende Richtungskomponente, insbesondere gesteigerter Strömungsgeschwindigkeit aufzuprägen, weist der Düsenraum 53 des erfindungsgemäßen Dual-Fuel-Kraftstoffinjektors 1 radial außenliegende Ausbuchtungen 83 auf, innerhalb deren jeweiligen Querschnitts je ein Einlaufquerschnitt 63 des über die jeweilige Gas-Düsennadel 5 selektiv versperrbaren Strömungswegs 59 zu wenigstens einer (nachgeordneten) Düsenöffnung 61 definiert ist. Dies wird nachfolgend anhand der Figuren 2 bis 4 für den Dual-Fuel-Kraftstoffinjektor 1 nach Fig. 1 näher erläutert.

**Fig. 2** zeigt den ersten Düsenkörper 3, welcher ringförmigen Querschnitt aufweist, radial geschnitten, d.h. mit Blickrichtung auf das düsenfeme Ende. Wie veranschaulicht, sind sowohl die für eine Brenngaszufuhr an den Düsenraum 53 bereitgestellten Gas-Hochdruckkanäle 49 im ersten Düsenkörper 3 als auch die den Düsenraum 53 unter Bildung der erfindungsgemäßen Ausbuchtungen 83 radial außenliegend anschneidenden Aufnahmen 7 je als Bohrung gebildet.

**Fig. 3** veranschaulicht nunmehr einen radialen Schnitt des ersten Düsenkörpers 3 geführt durch den Düsenraum 53, d.h. mit Blickrichtung auf das düsennahe Ende. Wie mittels der Pfeile A und B dargestellt, wird ein jeweiliger Einlaufquerschnitt 63, gebildet am Ort einer jeweiligen Ausbuchtung 83 - und insbesondere radial distal darin angeordnet - asymmetrisch angeströmt (Gas-Düsennadel 5 aufgesteuert). Im Rahmen dieser Anströmung stellt sich ein größerer Volumenstrom an der radial innenliegenden Seite des Einlaufquerschnitts und ein demgegenüber deutlich geringerer Volumenstrom an der radial außenliegenden Seite des Einlaufquerschnitts ein, mithin eine Strömung des Brenngases, welcher eine erhöhte radial nach außen gerichtete Geschwindigkeitskomponente nebst einer radial nach außen gerichteten Richtungskomponente aufgeprägt wird. Eine jeweilige Ausbauchung 83 fungiert dabei als strömungsleitende Einlaufgeometrie, welche Brenngas-Teilströme A und B aus entgegen gesetzten Umfangsrichtungen an dem Einlaufquerschnitt 63 der Ausbuchtung 83 zusammenführt.

**Fig. 4****,** eine abgebrochene Schnittansicht des Düsenkörpers 3 samt Düsennadeln 5, darstellend, zeigt die Geometrie eines jeweiligen Strömungswegs 59 näher, wobei ein Einlaufquerschnitt 63 bei offengesteuertem Strömungsweg 59 veranschaulicht ist. Ferner ist mit Pfeil C ein Einströmen in den Einlaufquerschnitt 63 und ein Durchströmen des Strömungswegs 59 skizziert.

Wie Fig. 4 zeigt, ist ein erster Abschnitt des Strömungswegs 59 stromabwärts eines jeweiligen Einlaufquerschnitts 63 z.B. mittels eines axialen Sackloches gebildet, welches die Aufnahme 7 zum düsennahen Ende hin fortsetzt. Von dem Sackloch zweigt ein zweiter Abschnitt des Strömungswegs 59 als radial nach außen orientierte Düsenöffnung 61 ab, so dass der Verlauf des Strömungswegs 59 insgesamt schräg orientiert ist, d.h. mit axialer als auch ausgeprägter radialer Richtungskomponente. Wie mittels Pfeil C gezeigt, wird durch die strömungsgünstige Ausbuchtung 83 hierbei ein nahezu einseitiges Einströmen mit der radialen Richtungskomponente des Verlaufs des Strömungswegs 59 erzielt, so dass die in den Einlaufquerschnitt 63 am Ort des Ventilsitzes einlaufende Strömung weniger starke Turbulenzen aufweist, mithin geringere Verluste resultieren und das Strahlbild, gerade in der Aufbauphase des Strahls, weniger stark gestört wird.

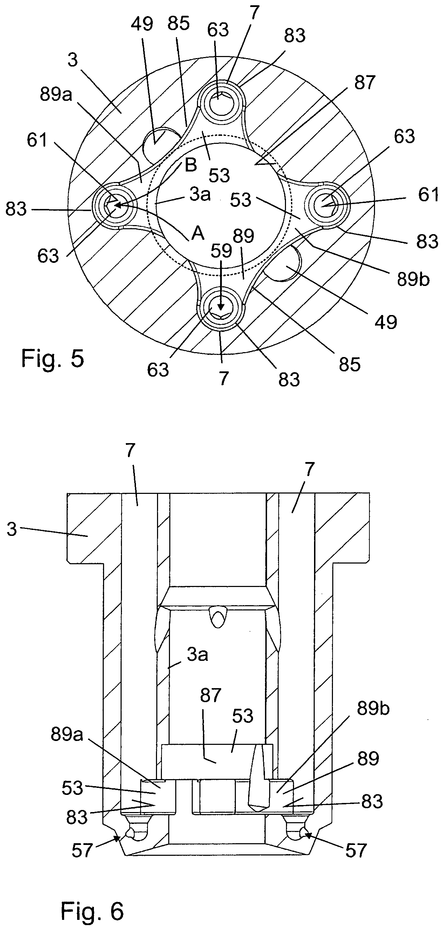

**Fig. 5** und **Fig. 6** zeigen einen Düsenkörper 3 eines Dual-Fuel-Kraftstoffinjektors 1 gemäß einer weiteren beispielhaften Ausgestaltung je im Schnitt.

Gemäß Fig. 5 ist die Form des Düsenraums 53 hierbei außenumfangsseitig der Form eines Mehrecks mit konkaven Seiten 85 angenähert, wobei die Ausbuchtungen 83 bzw. Einlaufquerschnitte 63 an den Ecken des Mehrecks gebildet sind, d.h. mittels der den Düsenraum 53 schneidenden Aufnahmen 7. Über die konkaven Seiten 85 beidseitig einer jeweiligen Ausbuchtung 83 wird hierbei eine verbessert strömungsleitende Einlaufgeometrie gebildet, welche quasi einen Einlauftrichter formt, welcher eine Anströmung des Einlaufquerschnitts 63 mit der beabsichtigten radial nach außen gerichteten Richtungskomponente bewirkt.

Bei der Ausführungsform nach Fig. 5 und Fig. 6 weist der Düsenraum 53 weiterhin einen axial düsenferneren Abschnitt 87 auf, mittels welchem von einander separierte, axial düsennähere Düsenraumabschnitte 89, an welchen die Ausbuchtungen 83 gebildet sind, kommunizierend verbunden sind. Die düsennäheren Düsenraumabschnitte 89 sind in Form zweier Kammern 89a, 89b bereitgestellt, welche über ihre axiale Erstreckung voneinander separiert gebildet sind, über den düsenferneren Düsenraumabschnitt 87 jedoch kommunizieren, (Querschnitt desselben in Fig. 5 gestrichelt eingezeichnet). Die Kommunikationsverbindung 87 zur homogenen Gasverteilung über diese Kammern 89a, 89b kann wie Fig. 6 veranschaulicht, z.B. über eine umlaufende Nut realisiert werden, welche bei der vorgeschlagenen Ausgestaltung z.B. als Eindrehung am Innenumfang des ersten Düsenkörpers 3 gebildet ist.

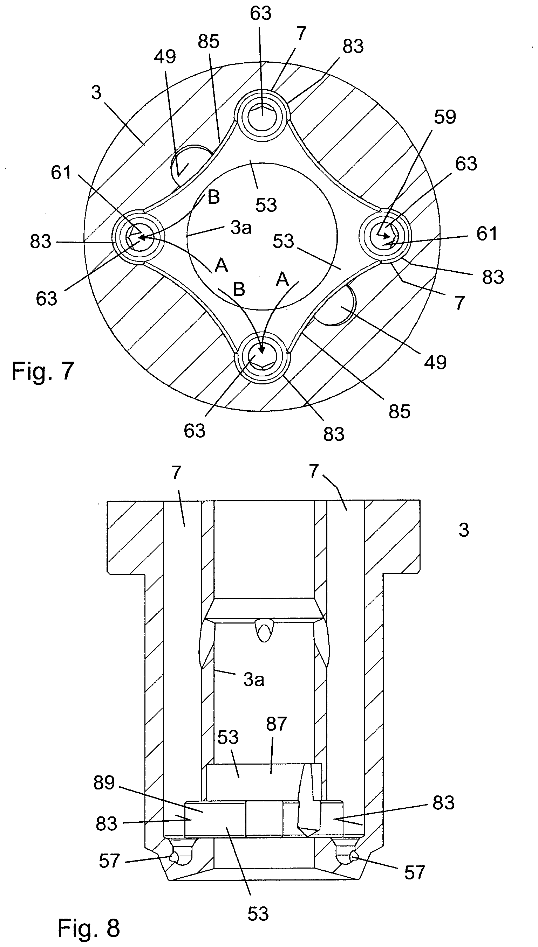

**Fig. 7** und **Fig. 8** zeigen je Schnittansichten eines weiteren ersten Düsenkörpers 3 eines Dual-Fuel-Kraftstoffinjektors 1 gemäß der Erfindung. Der Düsenkörper 3 weist einen Düsenraum 53 auf, dessen Geometrie der des Düsenraums 53 gemäß Fig. 5 und Fig. 6 angenähert ist, d.h. mit der Kontur eines Mehrecks mit konkaven Seiten 85. Hierbei ist der Düsenraum 53 in der Ebene der Ausbuchtungen 83 jedoch nicht in separate Kammern unterteilt, sondern in Umfangsrichung ununterbrochen umlaufend bzw. ringförmig gebildet. Um eine homogene Gasverteilung auch über die mittels der konkaven Seiten 85 gebildeten "Einschnürungen" hinweg zuverlässig zu realisieren, kann auch bei einer solchen Ausgestaltung eine das Düsenraumvolumen vergrößernde Maßnahme vorgesehen werden, z.B. wiederum in Form einer Eindrehung, welche düsenfern am Düsenraum 53 gebildet ist.

Insbesondere die Ausgestaltungen gemäß Fig. 5 bis Fig. 8 ermöglichen eine strömungsgünstige Führung des Brenngases an die Einlaufquerschnitte. Ähnlich wirksame Einlaufgeometrien können sich daneben z.B. auch mit sternförmigen, vom Gedanken der Erfindung mitumfassten Düsenraumformen ergeben.

## Patentansprüche

1. Dual-Fuel-Kraftstoffinjektor (1), aufweisend:
- eine Mehrzahl von hubsteuerbaren Gas-Düsennadeln (5), welche am Dual-Fuel-Kraftstoffinjektor (1) in jeweiligen Aufnahmen (7) axial verschieblich aufgenommen und in einer Umfangsrichtung des Dual-Fuel-Kraftstoffinjektors (1) verteilt sind;
- einen für die Mehrzahl der Gas-Düsennadeln (5) bereitgestellten Düsenraum (53),
**dadurch gekennzeichnet, dass**
- der Düsenraum (53) radial außenliegende Ausbuchtungen (83) aufweist, innerhalb deren jeweiligen Querschnitts je ein Einlaufquerschnitt (63) eines über die jeweilige Gas-Düsennadel (5) selektiv versperrbaren Strömungswegs (59) zu wenigstens einer Düsenöffnung (61) definiert ist.

2. Dual-Fuel-Kraftstoffinj ektor (1) nach Anspruch 1,
**dadurch gekennzeichnet, dass**
- die jeweilige Ausbuchtung (83) einem seitens des Düsenraums (53) in den Einlaufquerschnitt (63) strömenden Kraftstoff eine vom Düsenraum (53) radial nach außen weisende Richtungskomponente aufprägt; und/oder
- die jeweilige Ausbuchtung (83) einem seitens des Düsenraums (53) in den Einlaufquerschnitt (63) strömenden Kraftstoff eine erhöhte Geschwindigkeitskomponente in radial nach außen weisender Richtung vermittelt.

3. Dual-Fuel-Kraftstoffinjektor (1) nach einem der vorhergehenden Ansprüche,
**dadurch gekennzeichnet, dass**
- sich ein jeweiliger Strömungsweg (59) in einer Richtung erstreckt, deren radiale Komponente mit einer radialen Richtungskomponente eines über die Ausbuchtung (83) erzielten Strömungseinlaufs in den Einlaufquerschnitt (63) korrespondiert.

4. Dual-Fuel-Kraftstoffinjektor (1) nach einem der vorhergehenden Ansprüche,
**dadurch gekennzeichnet, dass**
- der jeweilige Einlaufquerschnitt (63) über die Ausbuchtung (83) an einer radial innenliegenden Seite anströmbar ist; und/oder
- der jeweilige Einlaufquerschnitt (63) über die Ausbuchtung (83) asymmetrisch anströmbar ist; und/oder
- ein jeweiliger Einlaufquerschnitt (63) radial distal in der Ausbuchtung (83) angeordnet ist.

5. Dual-Fuel-Kraftstoffinjektor (1) nach einem der vorhergehenden Ansprüche,
**dadurch gekennzeichnet, dass**
- ein jeweiliger Strömungsweg (59) ausgehend vom Düsenraum (53) mit kontinuierlich zunehmendem radialen Abstand zu demselben radial nach außen hin zu der Düsenöffnung (61) geführt ist.

6. Dual-Fuel-Kraftstoffinjektor (1) nach einem der vorhergehenden Ansprüche,
**dadurch gekennzeichnet, dass**
- mittels der jeweiligen Ausbuchtung (83) eine strömungsleitende Einlaufgeometrie gebildet ist, welche eine Anströmung des Einlaufquerschnitts (63) mit radial nach außen gerichteter Richtungskomponente bewirkt; und/oder
- mittels der jeweiligen Ausbuchtung (83) ein Einlauftrichter geformt ist, welcher eine Anströmung des Einlaufquerschnitts (63) mit radial nach außen gerichteter Richtungskomponente bewirkt.

7. Dual-Fuel-Kraftstoffinjektor (1) nach einem der vorhergehenden Ansprüche,
**dadurch gekennzeichnet, dass**
- die Form des Düsenraums (53) samt der Ausbuchtungen (83) in einer radialen Ebene außenumfangsseitig der Form eines Mehrecks und/oder eines Vierecks mit konkaven Seiten (85) angenähert ist; und/oder
- die Form des Düsenraums (53) samt der Ausbuchtungen (83) in einer radialen Ebene außenumfangsseitig eine Ringform aufweist, aus welcher mittels der Ausbuchtungen (83) gebildete Ausbauchungen radial herausragen.

8. Dual-Fuel-Kraftstoffinjektor (1) nach einem der vorhergehenden Ansprüche,
**dadurch gekennzeichnet, dass**
- der Düsenraum (53) einen axial düsenferneren Abschnitt (87) aufweist, mittels welchem axial düsennähere Düsenraumabschnitte (89), an welchen die Ausbuchtungen (83) gebildet sind, kommunizierend verbunden sind.

9. Dual-Fuel-Kraftstoffinjektor (1) nach einem der vorhergehenden Ansprüche,
**dadurch gekennzeichnet, dass**
- die Aufnahmen (7) den Düsenraum (53) unter Bildung der Ausbuchtungen (83) anschneiden.

10. Dual-Fuel-Kraftstoffinjektor (1) nach einem der vorhergehenden Ansprüche,
**dadurch gekennzeichnet, dass**
- der Düsenraum (53) mittels eines ersten (3) und eines zweiten (11) Düsenkörpers des Dual-Fuel-Kraftstoffinjektors (1) definiert ist; und/oder
- der Düsenraum (53) mittels eines ersten Düsenkörpers (3) gebildet ist, welchen der zweite Düsenkörper (11) unter Definition des Düsenraumes (53) über einen Abschnitt durchdringt.

11. Brennkraftmaschine,
**gekennzeichnet durch**
- wenigstens einen Dual-Fuel-Kraftstoffinjektor (1) nach einem der vorhergehenden Ansprüche.

## Claims

1. Dual-fuel fuel injector (1), having:
- a multiplicity of gas nozzle needles (5) which are controllable in terms of their stroke and which, on the dual-fuel fuel injector (1), are received in axially displaceable fashion in respective receptacles (7) and are distributed in a circumferential direction of the dual-fuel fuel injector (1);
- a nozzle chamber (53) provided for the multiplicity of gas nozzle needles (5),
**characterized in that**
- the nozzle chamber (53) has radially outer bulges (83), within the respective cross section of which there is defined in each case one inlet cross section (63) of a flow path (59), which can be selectively shut off by means of the respective gas nozzle needle (5), to at least one nozzle opening (61).

2. Dual-fuel fuel injector (1) according to Claim 1,
**characterized in that**
- the respective bulge (83) imparts a direction component pointing radially outward from the nozzle chamber (53) to a fuel flowing from the nozzle chamber (53) into the inlet cross section (63); and/or
- the respective bulge (83) imparts an increased speed component in a direction pointing radially outward to a fuel flowing from the nozzle chamber (53) into the inlet cross section (63).

3. Dual-fuel fuel injector (1) according to one of the preceding claims,
**characterized in that**
- a respective flow path (59) extends in a direction whose radial component corresponds to a radial direction component of an inflow, realized by means of the bulge (83), into the inlet cross section (63).

4. Dual-fuel fuel injector (1) according to one of the preceding claims,
**characterized in that**
- the respective inlet cross section (63) can be approached by flow via the bulge (83) at a radially inner side; and/or
- the respective inlet cross section (63) can be approached by flow via the bulge (83) asymmetrically; and/or
- a respective inlet cross section (63) is arranged radially distally in the bulge (83).

5. Dual-fuel fuel injector (1) according to one of the preceding claims,
**characterized in that**
- a respective flow path (59) leads from the nozzle chamber (53), with a continuously increasing radial spacing thereto, radially outward to the nozzle opening (61).

6. Dual-fuel fuel injector (1) according to one of the preceding claims,
**characterized in that**
- by means of the respective bulge (83), a flow-guiding inlet geometry is formed which effects an approaching flow to the inlet cross section (63) with a radially outwardly directed directional component; and/or
- by means of the respective bulge (83), an inlet funnel is formed which effects an approaching flow to the inlet cross section (63) with a radially outwardly directed directional component.

7. Dual-fuel fuel injector (1) according to one of the preceding claims,
**characterized in that**
- the shape of the nozzle chamber (53) together with the bulges (83) in a radial plane is, at the outer circumference, approximated to the shape of a polygon and/or of a tetragon with concave sides (85); and/or
- the shape of the nozzle chamber (53) together with the bulges (83) in a radial plane has, at the outer circumference, a ring shape from which protrusions formed by means of the bulges (83) project radially.

8. Dual-fuel fuel injector (1) according to one of the preceding claims,
**characterized in that**
- the nozzle chamber (53) has a section (87) which is axially relatively remote from the nozzles and by means of which nozzle chamber sections (89) which are axially relatively close to the nozzles, and at which the bulges (83), are formed are connected in communicating fashion.

9. Dual-fuel fuel injector (1) according to one of the preceding claims,
**characterized in that**
- the receptacles (7) intersect the nozzle chamber (53) so as to form the bulges (83).

10. Dual-fuel fuel injector (1) according to one of the preceding claims,
**characterized in that**
- the nozzle chamber (53) is defined by means of a first (3) and a second (11) nozzle body of the dual-fuel fuel injector (1); and/or
- the nozzle chamber (53) is formed by means of a first nozzle body (3) which is extended through by the second nozzle body (11), with the nozzle chamber (53) being defined, over a section.

11. Internal combustion engine,
**characterized by**
- at least one dual-fuel fuel injector (1) according to one of the preceding claims.

## Revendications

1. Injecteur de carburant dual-fuel (1), présentant :
- une pluralité d'aiguilles de buse à gaz à courses commandable (5) qui sont reçues de manière déplaçable axialement au niveau de l'injecteur de carburant dual fuel (1) dans des logements respectifs (7) et qui sont réparties dans une direction périphérique de l'injecteur de carburant dual fuel (1) ;
- un espace de buse (53) prévu pour la pluralité d'aiguilles de buse à gaz (5),
**caractérisé en ce que**
- l'espace de buse (53) présente des renflements situés radialement à l'extérieur (83) à l'intérieur des sections transversales respectives desquels est définie à chaque fois une section transversale d'entrée (63) d'une course d'écoulement (59), pouvant être bloquée de manière sélective par le biais de l'aiguille de buse à gaz respective (5), conduisant à au moins une ouverture de buse (61).

2. Injecteur de carburant dual fuel (1) selon la revendication 1,
**caractérisé en ce que**
- le renflement respectif (83) confère à un carburant s'écoulant du côté de l'espace de buse (53) dans la section transversale d'entrée (63) une composante directionnelle orientée radialement vers l'extérieur depuis l'espace de buse (53) ; et/ou
- le renflement respectif (83) communique à un carburant s'écoulant du côté de l'espace de buse (53) dans la section transversale d'entrée (63) une composante de vitesse accrue dans la direction orientée radialement vers l'extérieur.

3. Injecteur de carburant dual fuel (1) selon l'une quelconque des revendications précédentes,
**caractérisé en ce**
- **qu'**une course d'écoulement respective (59) s'étend dans une direction dont la composante radiale correspond à une composante directionnelle radiale d'une entrée d'écoulement, obtenue par le biais du renflement (83), dans la section transversale d'entrée (63).

4. Injecteur de carburant dual fuel (1) selon l'une quelconque des revendications précédentes,
**caractérisé en ce que**
- la section transversale d'entrée respective (63) peut recevoir l'écoulement par le biais du renflement (83) au niveau d'un côté situé radialement à l'intérieur ; et/ou
- la section transversale d'entrée respective (63) peut recevoir l'écoulement par le biais du renflement (83) de manière asymétrique ; et/ou
- une section transversale d'entrée respective (63) est disposée radialement et distalement dans le renflement (83).

5. Injecteur de carburant dual fuel (1) selon l'une quelconque des revendications précédentes,
**caractérisé en ce**
- **qu'**une course d'écoulement respective (59) est guidée à partir de l'espace de buse (53) avec une distance radiale croissante à celui-ci, radialement vers l'extérieur vers l'ouverture de buse (61).

6. Injecteur de carburant dual fuel (1) selon l'une quelconque des revendications précédentes,
**caractérisé en ce**
- **qu'**une géométrie d'entrée guidant l'écoulement est formée au moyen du renflement respectif (83), laquelle provoque un afflux sur la section transversale d'entrée (63) avec une composante directionnelle orientée radialement vers l'extérieur ; et/ou
- une trémie d'entrée est formée au moyen du renflement respectif (83), laquelle provoque un afflux sur la section transversale d'entrée (63) avec une composante directionnelle orientée radialement vers l'extérieur.

7. Injecteur de carburant dual fuel (1) selon l'une quelconque des revendications précédentes,
**caractérisé en ce que**
- la forme de l'espace de buse (53) conjointement avec les renflements (83) dans un plan radial du côté de la périphérie extérieure est approximativement identique à la forme d'un polygone et/ou d'un quadrilatère avec des côtés concaves (85) ; et/ou
- la forme de l'espace de buse (53) conjointement avec les renflements (83) présente, dans un plan radial du côté de la périphérie extérieure, une forme annulaire depuis laquelle font saillie radialement des bombements formés au moyen des renflements (83).

8. Injecteur de carburant dual fuel (1) selon l'une quelconque des revendications précédentes,
**caractérisé en ce que**
- l'espace de buse (53) présente une portion (87) plus éloignée axialement de la buse, au moyen de laquelle sont raccordées avec communication des portions d'espaces de buse plus proches axialement de la buse (89) au niveau desquelles sont formés les renflements (83).

9. Injecteur de carburant dual fuel (1) selon l'une quelconque des revendications précédentes,
**caractérisé en ce que**
les logements (7) coupent l'espace de buse (53) en formant les renflements (83).

10. Injecteur de carburant dual fuel (1) selon l'une quelconque des revendications précédentes,
**caractérisé en ce que**
- l'espace de buse (53) est défini au moyen d'un premier (3) et d'un deuxième (11) corps de buse de l'injecteur de carburant dual fuel (1) ; et/ou
- l'espace de buse (53) est formé au moyen d'un premier corps de buse (3) à travers lequel pénètre, sur une section, le deuxième corps de buse (11) en définissant l'espace de buse (53).

11. Moteur à combustion interne,
**caractérisé par**
- au moins un injecteur de carburant dual fuel (1) selon l'une quelconque des revendications précédentes.
